# EUROPEAN PATENT APPLICATION

(11) **EP 1 811 515 A1**
(43) Date of publication of application: **25.07.2007**
(21) Application number: 05795741.7
(22) Date of filing: 20.10.2005
(51) Int. Cl.: G11B 7/24

(54) **OPTICAL RECORDING MEDIUM**

(30) Priority: 20.10.2004 JP 2004306012
(71) Applicant: FUJIFILM Corporation, Minato-ku Tokyo 106-8620 (JP)
(72) Inventor: KATAYAMA, Kazutoshi, c/o FUJIFILM CO, Odawara-shi, Kanagawa 250-0001 (JP); USAMI, Yoshihisa, c/o FUJIFILM CO, Odawara-shi, Kanagawa 250-0001 (JP); KAKUTA, Takeshi, c/o FUJIFILM CO, Odawara-shi, Kanagawa 250-0001 (JP)
(74) Representative: HOFFMANN EITLE
(86) International application number: PCT/JP2005/019299
(87) International publication number: WO 2006/043625

(57) **Abstract**

The present invention provides an optical recording medium including, on a substrate, at least a recording layer containing an organic colorant and a light-transmitting layer, wherein the optical recording medium includes an intermediate layer including a Ta- or Nb-containing compound between the recording layer and the light-transmitting layer, and the thickness of the intermediate layer is 1 to 80 nm.

## Description

### TECHNICAL FIELD

The invention relates to an optical recording medium, in particular to a recordable optical recording medium having a recording layer containing an organic colorant.

### BACKGROUND ART

Along with the start of digital high-definition broadcasting, there exists a need for further improvement in image data quantity, and accordingly, for a recording medium having an increased capacity and an improved data transmission rate (see, for example, Patent Document 1). DVD±R is already considered to be insufficient in capacity when recording digital high-definition broadcasting programs at home, and currently, next-generation DVDs are under vigorous development. For example, a blue-ray disk recorder that allows recording and reproduction of a BS digital high-definition broadcasting program for 2 hours has been marketed.

A recording medium for the blue-ray disk recorder has also been marketed simultaneously, which is a medium having a phase-change recording layer. Production of the phase-change medium demands a large-scale vacuum film-forming apparatus, and the layer structure is also complicated.
For that reason, for more cost-effective production of recording media, recordable blue-ray disk media employing an organic colorant are under development, also in the next-generation DVD systems including the blue-ray disk. If spin coating of an organic colorant is used for film formation, it is advantageously possible to use the production facility used for production of CD-R and DVD-R.
At the same time, a high storability similar to that for conventional CD-R or DVD-R is demanded for the recordable blue-ray disk medium as well.

A recordable blue-ray disk medium has a configuration in which a reflective layer, a recording layer, and a transparent sheet (light-transmitting layer) are laminated in that order on a substrate. The transparent sheet is bonded, for example, with an adhesive. An intermediate layer is normally formed for prevention of the influence of the adhesive on the recording layer. In consideration of optical properties, tact times for completing film-forming, actual performance of use in phase-change optical disk media, and the like, use of a sulfur-containing material for the intermediate layer has been proposed. However, sulfur, when present in the intermediate layer, causes a problem of lowering the storability, because it reacts with the metals in the reflective layer (such as Ag) and forms sulfides. Thus, the present inventors proposed an optical recording medium having an intermediate layer substantially free from sulfur (Japanese Patent Application Laid-open (JP-A) No. 2005-228402). As a result, it became possible to prevent corrosion ofAg and improve the storability to some extent, but there still remain some improvement to be made.
Incidentally, such an intermediate layer was not needed in conventional CD-Rs and DVD-Rs, because no adhesive was used for bonding.
Patent Document 1: Japanese Patent Application Laid-Open (JP-A) No. 11-120617

### DISCLOSURE OF THE INVENTION

### Problems to be Solved by the Invention

The invention, which has been made to solve the traditional problems above, is aimed at achieving the following object.
Namely, an object of the invention is to provide a high storability optical recording medium capable of favorably preserving characteristics such as jitter.

### Means for Solving the Problems

The means to solve the problems are the followings:
<1> An optical recording medium comprising, on a substrate, at least a recording layer containing an organic colorant and a light-transmitting layer, wherein the optical recording medium comprises an intermediate layer comprising a Ta- or Nb-containing compound between the recording layer and the light-transmitting layer, and the thickness of the intermediate layer is 1 to 80 nm.
<2> The optical recording medium of <1>, wherein the Ta-containing compound is an oxide of Ta, and the Nb-containing compound is an oxide ofNb.
<3> The optical recording medium of <1>, wherein the thickness of the intermediate layer is 1.5 to 20 nm.
<4> The optical recording medium of <1>, further comprising a reflective layer between the substrate and the recording layer.
<5> The optical recording medium of <1>, further comprising a reflective layer between the substrate and the recording layer, wherein a groove is formed on the reflective layer-side surface of the substrate, and the depth of the groove is 20 to 70 nm.
<6> An optical recording medium comprising, on a substrate, at least a recording layer containing an organic colorant and a light-transmitting layer, wherein the optical recording medium comprises an intermediate layer comprising a Ta- and/or Nb-containing complex oxide between the recording layer and the light-transmitting layer, and the thickness of the intermediate layer is 1 to 80 nm.
<7> The optical recording medium of <6>, wherein the Ta- and/or Nb-containing complex oxide is at least one selected from the group consisting of Nb₂O₅-SiO₂, Nb₂O₅-Al₂O₃, Nb₂O₅-Ta₂O₅, and Ta₂O₅-SiO₂.
<8> The optical recording medium of <6>, wherein the thickness of the intermediate layer is 1.5 to 20 nm.
<9> The optical recording medium of <6>, further comprising a reflective layer between the substrate and the recording layer.
<10> The optical recording medium of <6>, further comprising a reflective layer between the substrate and the recording layer, wherein a groove is formed on the reflective layer-side surface of the substrate, and the depth of the groove is 20 to 70 nm.

### Advantageous effects of the invention

The invention can provide a high storability optical recording medium capable of favorably preserving characteristics such as jitter.

### BEST MODE FOR CARRYING OUT THE INVENTION

The optical recording medium according to the invention has, on a substrate, at least a recording layer containing an organic colorant and a light-transmitting layer. In a first embodiment, the optical recording medium has an intermediate layer including a Ta-containing compound or a Nb-containing compound between the recording layer and the light-transmitting layer. In a second embodiment, the optical recording medium has an intermediate layer including a Ta- and/or Nb-containing complex oxide between the recording layer and the light-transmitting layer. In each of the embodiments, the thickness of the intermediate layer is 1 to 80 nm.
Presence of such an intermediate layer improves the storability, in particular the wet heat storability of the medium, in each of the embodiments. This seems to be because the intermediate layer, which is resistant to degradation with water, blocks migration of water into the recording layer, consequently leading to the high storability of the medium while keeping the properties such as jitter at favorable levels.

In the first embodiment of the invention, examples of the Ta- or Nb-containing compound, a component of the intermediate layer, include oxides and nitrides of Ta or Nb, and among them, oxides are preferable. Favorable examples of the oxides include Ta₂O₅, Nb₂Oₓ, NbO, and TaO.

In the second embodiment of the invention, examples of the Ta- and/or Nb-containing complex oxide, a component of the intermediate layer, include Nb₂O₅-SiO₂, Nb₂O₅-Al₂O₃, Nb₂O₅-Ta₂O₅, Ta₂O₅-SiO₂, Ta₂O₅-Al₂O₃, and the like; and, among them, Nb₂O₅-SiO₂, Nb₂O₅-Al₂O₃, Nb₂O₅-Ta₂O₅, and Ta₂O₅-SiO₂ are preferable.
By using a complex oxide as a component of the intermediate layer, it is possible to change the refractive index thereof according to the complex oxide used and its composition. It is thus possible to adjust the reflectance of the resulting optical recording medium.

The thickness of the intermediate layer is 1 to 80 nm in each of the embodiments of the invention, and it is possible to easily form a void during pit formation in recording and thus improve jitter, when the thickness of the intermediate layer is in the range above. A thickness of less than 1 nm leads to insufficient separation of the organic colorant in the recording layer from the adhesive layer, while a thickness of more than 80 nm leads to deterioration of recording and reproducing characteristics. The thickness of the intermediate layer is more preferably 1 to 50 nm and still more preferably 1.5 to 20 nm.

The intermediate layer is formed, for example, by sputtering using a Ta- or Nb-containing compound, an oxide of Ta or Nb, or an oxide of the other element as the target. In such a case, the pressure during film formation is preferably 1 × 10⁻² to 1 × 10⁻⁵ torr, and the rate (sputtering speed) is preferably 0.1 to 10 nm/sec. The gas used is, for example, Ar, and the gas flow rate is preferably 1 to 50 sccm (1 to 50 ml/min). The sputtering power is preferably 0.2 to 4 kW, more preferably 0.4 to 3 kW, and still more preferably 0.5 to 2.5 kW.

When the film is formed by RF sputtering, the tuning (matching) is so adjusted that the ratio of REF/FWD becomes 10% or less, preferably 5% or less, and more preferably 2.5% or less. When an oxide or nitride is used, the gas thereof may be introduced into the sputtering gas and then the film may be formed by reactive sputtering.

Alternatively, the film may be formed by DC sputtering, depending on the target used. In such a case, it is preferable to use a method of removing electrostatic charges on the target instantaneously, for example by pulse sputtering or by chopper.

A favorable layer structure of the optical recording medium according to the invention is (an intermediate layer), a reflective layer, (an intermediate layer), a recording layer, an intermediate layer, an adhesive layer, a light-transmitting layer, and (a hardcoat layer) formed in that order on a substrate. Another layer may further be formed between respective layers for improvement in adhesiveness, recording characteristic, storability and the like. The layers in parenthesis in the configuration above are layers formed as needed.
It is possible to use the optical recording medium according to the invention as a blue-ray disk when forming a reflective layer between the substrate and the recording layer and forming a groove having a depth of 20 to 70 nm on the reflective layer-side surface of the substrate.
When the on-groove region is used as the recording track, the groove depth is preferably 20 to 50 nm, while, when the in-groove region is used as the recording track, the groove depth is preferably 30 to 70 nm.

Hereinafter, the substrate and the other layers for the optical recording medium according to the invention will be described. But the invention is not limited by these specific examples.

### (Substrate)

Typical examples of the substrate materials include, glass; polycarbonate; acrylic resins such polymethyl methacrylate; vinyl chloride resins such as polyvinyl chloride, and polyvinyl chloride copolymers; epoxy resins; amorphous polyolefins; polyester; metals such as aluminum; and the like, and these materials may also be used in combination of two or more.
Among the materials above, polycarbonate and amorphous polyolefins are preferable, and polycarbonate is particularly preferable from the points of moisture resistance, dimensional stability, cost, and the like. The thickness of the substrate (average thickness of the region carrying a recording layer) is preferably in the range of 1.1±0.3 mm.

A guide groove for tracking or surface irregularity indicating information such as address signal (the raised line on the substrate is called "on groove", and the dent, "in groove", and hereinafter, the "on groove" may be called a "groove") is formed on the substrate. It is preferable to form a groove having a track pitch smaller than that of CD-R or DVD-R on the substrate, in order to obtain a higher recording density.

The groove track pitch is preferably in the range of 300 to 360 nm, more preferably 310 to 340 nm.
The groove depth is preferably in the range of 20 to 70 nm. When the on-groove region is used for record tracking, the groove depth is preferably 20 to 50 nm, when the in-groove region is used for record tracking, the groove depth is preferably 30 to 70 nm. When the depth is in the range above, it is possible to prevent lowering of the tracking error signal and thus tracking error and to make molding easier. More preferably, the depth is 25 to 40 nm when the on-groove region is used for record tracking, and the depth is 35 to 60 nm when the in-groove region is used for record tracking. 25 to 40 nm.

The half value width of the track region to be recorded on the substrate is preferably in the range of 50 to 200 nm. It is possible to prevent tracking error and reduce jitter in the range above. The half value width is more preferably in the range of 70 to 190 nm and more preferably 90 to 180 nm.

An undercoat layer may be formed on the reflective layer-side substrate surface (the reflective layer is described below), for improvement in planarity and adhesiveness.
Examples of the materials for the undercoat layer include polymer substances such as polymethyl methacrylate, acrylic acid-methacrylic acid copolymers, styrene-maleic anhydride copolymers, polyvinylalcohol, N-methylol acrylamide, styrene-vinyltoluene copolymers, chlorosulfonated polyethylenes, nitrocellulose, polyvinyl chloride, chlorinated polyolefins, polyester, polyimide, vinyl acetate-vinyl chloride copolymers, ethylene-vinyl acetate copolymers, polyethylene, polypropylene, and polycarbonate; surface modifiers such as silane-coupling agents; and the like.
The undercoat layer is formed, for example, by preparing a coating liquid by dissolving or dispersing the material above in a suitable solvent and applying the coating liquid on the substrate surface by a coating method such as spin coating, dip coating, or extrusion coating. The thickness of the undercoat layer is generally in the range of 0.005 to 20 µm, preferably in the range of 0.01 to 10 µm.

### (Reflective layer)

A light reflective substance that is highly reflective to laser beam is used for the reflective layer. The reflectance is preferably 70% or more.
Examples of the light reflective substances include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, and stainless steel. These light reflective substances may be used alone, in combination of two or more, or as an alloy. Among them, preferable are Cr, Ni, Pt, Cu, Ag, Au, A1 and stainless steel. Particularly preferable are Au, Ag, Al, and alloys thereof, and most preferable are Ag and alloys containing Ag as a main component (Ag: 50 mass % or more).

The reflective layer is formed, for example, by forming a layer of the light reflective substance on a substrate by vapor deposition, sputtering or ion plating. The thickness of the reflective layer is generally in the range of 10 to 300 nm, preferably in the range of 50 to 200 nm.

### (Recording layer)

The recording layer is a colored layer that contains an organic colorant, is formed on the reflective layer, and allows information recording with a laser beam having a wavelength of 500 nm or shorter.
Typical examples of the organic colorants include cyanine colorants, oxonol colorants, metallocomplex colorant, azo colorants, phthalocyanine colorants, and the like.

Other favorable examples of the organic colorants include those described in JP-A Nos. 4-74690, 8-127174, 11-53758, 11-334204, 11-334205, 11-334206, 11-334207, 2000-43423, 2000-108513, and 2000-158818, and the like.
In addition, organic compounds such as triazole compounds, triazine compounds, cyanine compounds, merocyanine compounds, aminobutadiene compounds, phthalocyanine compounds, cinnamic acid compounds, viologen compounds, azo compounds, oxonol benzoxazole compounds, and benzotriazole compounds are also used favorably as the raw materials for the recording layer. Among these compounds, cyanine compounds, aminobutadiene compounds, benzotriazole compounds, and phthalocyanine compounds are particularly preferable.

The recording layer is formed by preparing a coating liquid by dissolving an organic colorant recording substance, a binder and the like in a suitable solvent, applying the coating liquid on the reflective layer formed on a substrate surface, and drying the coated film formed. The concentration of the recording substance in the coating liquid is generally in the range of 0.01 to 15 mass %, preferably 0.1 to 10 mass %, more preferably 0.5 to 5 mass %, and most preferably 0.5 to 3 mass %.

Examples of the solvents for the coating liquid include esters such as butyl acetate, ethyl lactate, and cellosolve acetate; ketones such as methylethylketone, cyclohexanone, and methylisobutylketone; chlorinated hydrocarbons such as diichloromethane, 1,2-dichloroethane, and chloroform; amides such as dimethylformamide; hydrocarbons such as methylcyclohexane; ethers such as tetrahydrofuran, ethylether, and dioxane; alcohols such as ethanol, n-propanol, isopropanol, n-butanol, and diacetone alcohol; fluorinated solvents such as 2,2,3,3-tetrafluoropropanol; glycol ethers such as ethylene glycol monomethylether, ethylene glycol monoethylether, and propylene glycol monomethylether; and the like.
The solvents may be used alone or in combination of two or more, according to the solubility of the recording substance used. Various other additives such as antioxidant, UV absorbent, plasticizer and lubricant may be added to the coating liquid additionally according to applications.

Examples of the binders when used include natural organic polymer substances such as gelatin, cellulose derivative, dextran, rosin, and rubber; synthetic organic polymers including hydrocarbon resins such as polyethylene, polypropylene, polystyrene, and polyisobutylene, vinyl resins such as polyvinyl chloride, polyvinylidene chloride, and polyvinyl chloride-polyvinyl acetate copolymers, acrylic resins such as polymethyl acrylate and polymethyl methacrylate, polyvinylalcohol, chlorinated polyethylene, epoxy resins, butyral resins, rubber derivatives, initial condensates of a thermosetting resin such as phenol-formaldehyde resin; and the like. The amount of the binder, when used as a material for the recoding layer, is generally in the range of 0.01 to 50 times (by mass), preferably in the range of 0.1 to 5 times (by mass), with respect to the recording substance. The concentration of the recording substance in the coating liquid thus prepared is generally in the range of 0.01 to 10 mass %, preferably in the range of 0.1 to 5 mass %.

Examples of the method for applying the coating liquid on the substrate include spraying, spin coating, dip coating, roll coating, blade coating, doctor roll coating, and screen printing. The recording layer may be a single layer or plural layers. The thickness of the recording layer is normally in the range of 20 to 500 nm, preferably in the range of 30 to 300 nm, and more preferably in the range of 50 to 100 nm.

The recording layer may contain various kinds of anti-fading agents for improvement of the light fastness of the recording layer.
Normally, a singlet oxygen quencher is used as the anti-fading agent. Singlet oxygen quenchers that are already described in publications including patent descriptions can be used as the anti-fading agents.
Typical examples thereof include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492, JP-B Nos. 1-38680 and 6-26028, German Patent No. 350399, and Nippon Kagaku Kaishi JP, Oct. 1992, p.1141, and the like.

The amount of the anti-fading agent such as a singlet oxygen quencher to be used is normally in the range of 0.1 to 50% by mass, preferably in the range of 0.5 to 45% by mass, more preferably in the range of 3 to 40% by mass, and particularly preferably in the range of 5 to 25% by mass, with respect to the amount of the organic colorant.

### (Intermediate layer)

The intermediate layer is formed on the recording layer with the material described above by the method described above. The intermediate layer should be formed between the recording layer and the light-transmitting layer, and may be formed additionally at least either between the "substrate and the reflective layer" or between the "reflective layer and the recording layer".

### (Light-transmitting layer)

A light-transmitting layer is formed, for example, for protection of the internal optical recording medium from contamination, scratching, shock, and the like and for prevention of water penetration. The material for the light-transmitting layer is not particularly limited, as long as it is transparent, and is preferably a transparent sheet of polycarbonate, cellulose triacetate, or the like carrying an adhesive attached at least to one face thereof. The term "transparent" means that the layer transmits the recording light and reproducing light (at a transmittance of 90% or more).

A hardcoat layer may be formed on the face of the transparent sheet opposite to the adhesive-attached face, for prevention of scratching of the transparent sheet. Such a transparent sheet is preferably formed on the recording layer in the following manner:
First, a radiation-curing resin coating liquid is applied continuously on one face of a transparent sheet that is rolled. The coated film thus formed is then hardened by continuous irradiation of radiation ray, to form a hard coat layer on the transparent sheet. Then, an adhesive layer of an adhesive is formed continuously on the other face of the transparent sheet, and the transparent sheet carrying the hardcoat layer and the adhesive layer is then cut into pieces in a particular shape (disk shape). The transparent sheet is bonded onto a recording layer by using the adhesive layer of the disk-shaped transparent sheet as the bonding surface, forming a light-transmitting layer. The method of bonding the transparent sheet is only an example, and various other methods may be applied.

The thickness of the transparent sheet is preferably in the range of 0.03 to 0.15 mm, more preferably in the range of 0.05 to 0.12 mm. Advantageously, it is possible to handle the sheet easily and to reduce the coma aberration in the range above.

Examples of the adhesives for use include acrylic, rubber-based, and silicone-based adhesives, but acrylic adhesives are preferable from the viewpoints of transparency and durability. The acrylic adhesives is preferably, for example, copolymers of 2-ethylhexyl acrylate, n-butyl acrylate, or the like (as a main component) with a short-chain alkyl acrylate or methacrylate such as methyl acrylate, ethyl acrylate, or methyl methacrylate, (which is added for improvement in aggregation force) and acrylic acid, methacrylic acid, an acryl amide derivative, maleic acid, hydroxylethyl acrylate, or glycidyl acrylate (which becomes the crosslinking point with a crosslinking agent). By properly adjusting the blending ratio and the kinds of the main component, short-chain component and the crosslinking-point component, it is possible to alter the glass transition temperature (Tg) and the crosslinking density.
Alternatively, a commercially available transparent sheet carrying an adhesive may be used.

The radiation curing resin used for the hardcoat layer is hardened by irradiation of radiation ray, and more specifically, it is preferably a resin having two or more radiation ray-sensitive double bonds in the molecule.
Examples of the resins include acrylic esters, acrylamides, methacrylic esters, methacrylic amides, allyl compounds, vinyl ethers, vinyl esters and the like. Among them, preferable are bi- or more functional acrylate or methacrylate compounds.

Hereinafter, the method of recording information on the optical recording medium according to the invention and the method of reproducing the information recorded will be described.
Information is recorded on the optical recording medium, for example, in the following manner:
First, a recording laser beam at a wavelength of 350 to 500 nm (preferably, 400 to 440 nm) is irradiated on the optical recording medium rotating at a constant linear velocity from the transparent sheet side (opposite side of the substrate). Irradiation of the laser beam causes local increase in temperature and physical or chemical change (for example, pit formation) on the recording layer and leads to change in optical properties in the area where the laser beam is absorbed. Information is recorded by the change in optical properties.

Examples of the laser sources emitting a beam having a wavelength of 350 to 500 nm include blue violet semiconductor laser having an emission wavelength in the range of 390 to 415 nm; blue violet SHG laser having a central emission wavelength of approximately 430 nm; and the like.
The numerical aperture (NA) of the object lens for pickup is preferably 0.7 or more, more preferably 0.80 or more, for improvement of recording density.

On the other hand, the recorded information is reproduced by irradiating a laser beam having a wavelength the same as or not longer than that of the laser used for information recording, on the optical recording medium rotating at the same linear velocity as above from the transparent sheet side and detecting the reflected light.

### EXAMPLES

Hereinafter, the present invention will be described in more detail with reference to Examples, but it should be understood that the invention is not limited by the following Examples.

### [Example 1]

A substrate having a thickness of 1.1 mm was prepared by injection molding using a polycarbonate resin (Panlite AD5503) manufactured by Teijin Chemicals Ltd. The groove track pitch of the substrate was 320 nm; the half value width of the on-groove region, 120 nm; and the groove depth, 35 nm.

A reflective layer having a thickness of 100 nm was formed on the substrate using a target of Ag: 98.4 at %, Nd: 0.7 at %, and Cu: 0.9 at % by vacuum film-forming method. The power applied was 2 kW, and the Ar flow rate was 5 sccm.

Two g of the organic colorant A represented by the following Chemical Formula (refractive index: 1.85) was weighed and dissolved in 100 ml of TFP. The colorant was dissolved completely while the solution was ultrasonicated for 2 hours, and the mixture was left under an environment at 23°C and 50% for 0.5 hour or more and filtered through a 0.2-µm filter. A recording layer having a thickness of 110 nm was formed by applying the filtrate on the reflective layer by spin coating. The coated film was then heated in a clean oven at 80°C for 1 hour.

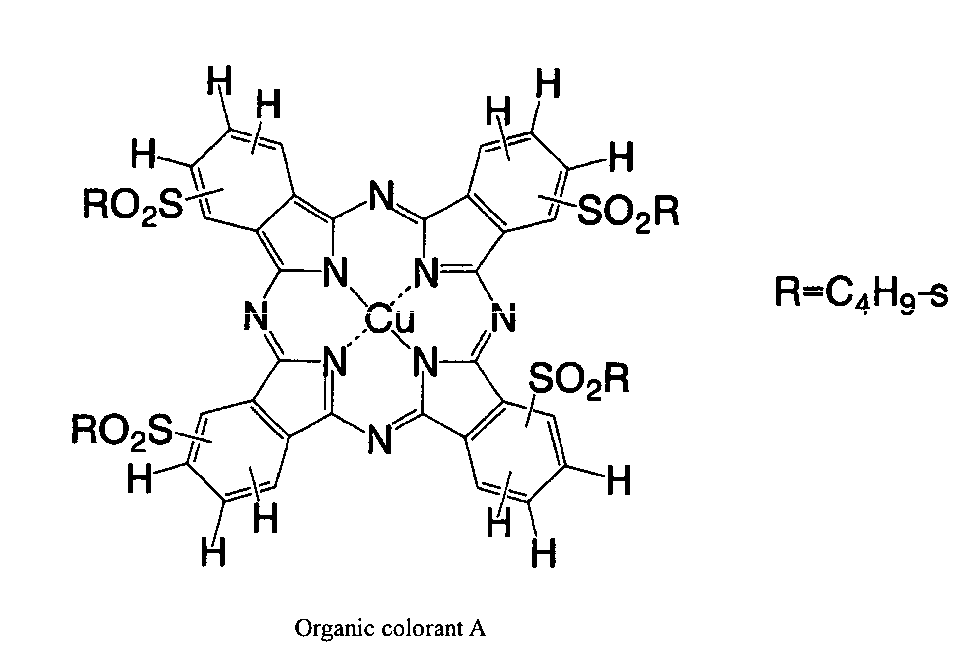

After heat treatment, an intermediate layer having a thickness of 10 nm was formed thereon using a target of Ta₂O₅ by vacuum film-forming method. The power applied was 2 kW; the Ar flow rate was 50sccm; FWD was 1,000, and REF was 20 after optimization of RF tuning. The refractive index of the intermediate layer was 2.0.

After the intermediate layer is formed, a polycarbonate film (thickness: 80 µm) carrying an adhesive layer having a thickness of 20 µm on one face was bonded to give an optical recording medium.

Random signals (2T to 8T) 1-7 modulated at a power of 5.5 mW were recorded on the optical recording medium thus prepared in DDU-1000 (manufactured by Pulstec Industrial Co., Ltd.) equipped with an optical system of a NA of 0.85 emitting a laser beam having a wavelength of 403 nm, and the signals were reproduced at a power of 0.35 mW, and the jitter was evaluated. The linear velocity was 5.28 m/s, and the emission pattern of the laser during recording was optimized. The jitter was determined using a conventional equalizer. Results are summarized in the following Table 1.

The jitter of the recorded track after storage of the optical recording medium under an environment of 60°C and 90% RH for 168 hours was determined under the same condition as that before storage, and the jitter was compared with that before storage (archival jitter change). Results are summarized in the following Table 1.

The jitter on the unrecorded track after storage was evaluated similarly to that before storage, and compared with the jitter evaluated before storage (shelf jitter change).
The storability was evaluated according to the following criteria: between before and after storage, a jitter increase of 5% or less is O, and a jitter increase of more than that is X.

### [Example 2]

An optical recording medium of Example 2 was prepared and evaluated in a similar manner to Example 1, except that a target of Nb₂O_{4.83} was used in forming the intermediate layer. Results are summarized in the following Table 1. The refractive index of the intermediate layer was 2.1.

### [Example 3]

An optical recording medium of Example 3 was prepared and evaluated in a similar manner to Example 1, except that a target of Nb₂O_{4.83} was used in forming the intermediate layer and the layer thickness was changed to 50 nm. Results are summarized in the following Table 1. The refractive index of the intermediate layer was 2.1.

### [Example 4]

An optical recording medium of Example 4 was prepared and evaluated in a similar manner to Example 1, except that a target of Nb₂O_{4.83} was used in forming the intermediate layer and the layer thickness was changed to 70 nm. Results are summarized in the following Table 1. The refractive index of the intermediate layer was 2.1.

### [Example 5]

An optical recording medium of Example 5 was prepared and evaluated in a similar manner to Example 1, except that a target of Nb₂O_{4.83} was used in forming the intermediate layer and the layer thickness was changed to 1.5 nm.
Results are summarized in the following Table 1. The refractive index of the intermediate layer was 2.1.

### [Example 6]

An optical recording medium of Example 6 was prepared and evaluated in a similar manner to Example 1, except that a target of Nb₂O₅: 70 at % and SiO₂: 30 at % was used in forming the intermediate layer. Results are summarized in the following Table 1. The refractive index of the intermediate layer was 2.

### [Example 7]

An optical recording medium of Example 7 was prepared and evaluated in a similar manner to Example 1, except that a target of Nb₂O₅: 30 at % and SiO₂: 70 at % was used in forming the intermediate layer. Results are summarized in the following Table 1. The refractive index of the intermediate layer was 1.8.

### [Example 8]

An optical recording medium of Example 8 was prepared and evaluated in a similar manner to Example 1, except that a target of Nb₂O₅: 70 at % and Al₂O₃: 30 at % was used in forming the intermediate layer. Results are summarized in the following Table 1. The refractive index of the intermediate layer was 2.

### [Example 9]

An optical recording medium of Example 9 was prepared and evaluated in a similar manner to Example 1, except that a target of Nb₂O₅: 50 at % and Ta₂O₅: 50 at % was used in forming the intermediate layer. Results are summarized in the following Table 1. The refractive index of the intermediate layer was 2.1.

### [Example 10]

An optical recording medium of Example 10 was prepared and evaluated in a similar manner to Example 1, except that a target of Ta₂O₅: 70 at % and SiO₂: 30 at % was used in forming the intermediate layer. Results are summarized in the following Table 1. The refractive index of the intermediate layer was 2.

### [Comparative Example 1]

An optical recording medium of Comparative Example 1 was prepared and evaluated in a similar manner to Example 1, except that a target of ZnO: 30 at % and Ga₂O₃: 70 at % was used in forming the intermediate layer. Results are summarized in the following Table 1. The refractive index of the intermediate layer was 1.8.

### [Comparative Example 2]

An optical recording medium of Comparative Example 2 was prepared and evaluated in a similar manner to Example 1, except that a target of Nb₂O_{4.83} was used in forming the intermediate layer and the layer thickness was changed to 100 nm.
The refractive index of the intermediate layer was 2.1.

### [Comparative Example 3]

An optical recording medium of Comparative Example 3 was prepared and evaluated in a similar manner to Example 1, except that a target of Nb₂O_{4.83} was used and the layer thickness was changed to 0.9 nm in forming the intermediate layer. The refractive index of the intermediate layer was 2.1.

**Table 1**

| | Material for intermediate layer | Layer thickness | Refractive index | Recording before storage Evaluation before storage | Recording before storage Evaluation after storage | Recording after storage Evaluation after storage | Judgment |
|---|---|---|---|---|---|---|---|
| Example 1 | Ta₂O₅ | 10 nm | 2.0 | 12.5% | 12.9% | 14.3% | O |
| Example 2 | Nb₂O_{4.83} | 10 nm | 2.1 | 12.9% | 13.0% | 13.6% | O |
| Example 3 | Nb₂O_{4.83} | 50 nm | 2.1 | 16.5% | 16.4% | 16.8% | O |
| Example 4 | Nb₂O_{4.83} | 70 nm | 2.1 | 17.1% | 17.1% | 17.3% | O |
| Example 5 | Nb₂O_{4.83} | 1.5 nm | 2.1 | 15.1% | 16.5% | 17.2% | O |
| Example 6 | Nb₂O₅-SiO₂(7:3) | 10 nm | 2 | 13.4% | 13.6% | 14% | O |
| Example 7 | Nb₂O₅-SiO₂ (3:7) | 10 nm | 1.8 | 13.9% | 14.3% | 14.4% | O |
| Example 8 | Nb₂O₅-Al₂O₃ (7:3) | 10 nm | 2 | 14% | 14% | 14.6% | O |
| Example 9 | Nb₂O₅-Ta₂O₅ (5:5) | 10 nm | 2.1 | 16.1% | 16% | 16.9% | O |
| Example 10 | Ta₂O₅-SiO₂(7:3) | 10 nm | 2 | 13.5% | 13.7% | 14.2% | O |
| Comparative Example 1 | ZnO-Ga₂O₃ | 10 nm | 1.8 | 11.1% | 11.4% | 19.3% | X |
| Comparative Example 2 | Nb₂O_{4.83} | 100 nm | 2.1 | Unmeasurable | - | Unmeasurable | X |
| Comparative Example 3 | Nb₂O_{4.83} | 0.9 nm | 2.1 | 17.3% | 18.5% | Unmeasurable | X |

As apparent from Table 1, each of the optical recording media obtained in Examples 1 to 10 had no significant difference in jitter between before and after storage and was superior in storability. In contrast, each of the optical recording media obtained in Comparative Examples 1 to 3 had a greater change in jitter between before and after storage, or could not be measured.

## Claims

1. An optical recording medium comprising, on a substrate, at least a recording layer containing an organic colorant and a light-transmitting layer, wherein the optical recording medium comprises an intermediate layer comprising a Ta- or Nb-containing compound between the recording layer and the light-transmitting layer, and the thickness of the intermediate layer is 1 to 80 nm.

2. The optical recording medium of Claim 1, wherein the Ta-containing compound is an oxide of Ta, and the Nb-containing compound is an oxide ofNb.

3. The optical recording medium of Claim 1, wherein the thickness of the intermediate layer is 1.5 to 20 nm.

4. The optical recording medium of Claim 1, further comprising a reflective layer between the substrate and the recording layer.

5. The optical recording medium of Claim 1, further comprising a reflective layer between the substrate and the recording layer, wherein a groove is formed on the reflective layer-side surface of the substrate, and the depth of the groove is 20 to 70 nm.

6. An optical recording medium comprising, on a substrate, at least a recording layer containing an organic colorant and a light-transmitting layer, wherein the optical recording medium comprises an intermediate layer comprising a Ta- and/or Nb-containing complex oxide between the recording layer and the light-transmitting layer, and the thickness of the intermediate layer is 1 to 80 nm.

7. The optical recording medium of Claim 6, wherein the Ta- and/or Nb-containing complex oxide is at least one selected from the group consisting of Nb₂O₅-SiO₂, Nb₂O₅-Al₂O₃, Nb₂O₅-Ta₂O₅, and Ta₂O₅-SiO₂.

8. The optical recording medium of Claim 6, wherein the thickness of the intermediate layer is 1.5 to 20 nm.

9. The optical recording medium of Claim 6, further comprising a reflective layer between the substrate and the recording layer.

10. The optical recording medium of Claim 6, further comprising a reflective layer between the substrate and the recording layer, wherein a groove is formed on the reflective layer-side surface of the substrate, and the depth of the groove is 20 to 70 nm.

## Amended claims

### Amended claims under Art. 19.1 PCT

**1.** An optical recording medium comprising, on a substrate, at least a recording layer containing an organic colorant and a light-transmitting layer, wherein the optical recording medium comprises an intermediate layer comprising a Ta- or Nb-containing compound between the recording layer and the light-transmitting layer, and the thickness of the intermediate layer is 1 to 80 nm.

**2.** The optical recording medium of Claim 1, wherein the Ta-containing compound is an oxide of Ta, and the Nb-containing compound is an oxide ofNb.

**3.** (Amended) The optical recording medium of Claim 2, wherein the oxide ofTa is Ta₂O₅, and the oxide ofNb is Nb₂O_{4.83}.

**4.** (Amended) The optical recording medium of Claim 1, wherein the thickness of the intermediate layer is 1.5 to 20 nm.

**5.** (Amended) The optical recording medium of Claim 1, further comprising a reflective layer between the substrate and the recording layer.

**6.** (Amended) The optical recording medium of Claim 1, further comprising a reflective layer between the substrate and the recording layer, wherein a groove is formed on the reflective layer-side surface of the substrate, and the depth of the groove is 20 to 70 nm.

**7.** (Amended) An optical recording medium comprising, on a substrate, at least a recording layer containing an organic colorant and a light-transmitting layer, wherein the optical recording medium comprises an intermediate layer comprising a Ta- and/or Nb-containing complex oxide between the recording layer and the light-transmitting layer, and the thickness of the intermediate layer is 1 to 80 nm.

**8.** (Amended) The optical recording medium of Claim 7, wherein the Ta- and/or Nb-containing complex oxide is at least one selected from the group consisting of Nb₂O₅-SiO₂, Nb₂O₅-Al₂O₃, Nb₂O₅-Ta₂O₅, and Ta₂O₅-SiO₂.

**9.** (Amended) The optical recording medium of Claim 7, wherein the thickness of the intermediate layer is 1.5 to 20 nm.

**10.** (Amended) The optical recording medium of Claim 7, further comprising a reflective layer between the substrate and the recording layer.

**11.** (Added) The optical recording medium of Claim 7, further comprising a reflective layer between the substrate and the recording layer, wherein a groove is formed on the reflective layer-side surface of the substrate, and the depth of the groove is 20 to 70 nm.

**12.** (Added) The optical recording medium of Claim 7, wherein the organic colorant is at least one selected from the group consisting of cyanine colorants, oxonol colorants, metallocomplex colorants, azo colorants, and phthalocyanine colorants.
